# EUROPEAN PATENT APPLICATION

(11) **EP 4 047 538 A1**
(43) Date of publication of application: **24.08.2022**
(21) Application number: 22151489.6
(22) Date of filing: 14.01.2022
(51) Int. Cl.: G06Q 20/40, G06Q 20/18, G06Q 20/20, G07G 3/00, G06Q 20/42

(54) **SELF-CHECKOUT SYSTEM AND METHOD**

(30) Priority: 19.02.2021 JP 2021024921
(71) Applicant: Toshiba TEC Kabushiki Kaisha, Tokyo 141-8562 (JP)
(72) Inventor: Naito, Hidehiro, Shinagawa-ku, Tokyo 141-8562 (JP); Miyashima, Atsushi, Shinagawa-ku, Tokyo 141-8562 (JP); Kaneko, Toshihiro, Shinagawa-ku, Tokyo 141-8562 (JP); Kawaguchi, Yuki, Shinagawa-ku, Tokyo 141-8562 (JP); Tanihira, Taiki, Shinagawa-ku, Tokyo 141-8562 (JP); Yajima, Shinsuke, Shinagawa-ku, Tokyo 141-8562 (JP); Ito, Masaki, Shinagawa-ku, Tokyo 141-8562 (JP); Saitou, Takahiro, Shinagawa-ku, Tokyo 141-8562 (JP)
(74) Representative: Bandpay & Greuter

(57) **Abstract**

A self-checkout system includes a commodity registration apparatus and a management server. The commodity registration apparatus includes a first storage device and a first processor. The first processor acquires an image of a customer at commodity registration apparatus and information related to commodity registration. The first processor detects possible fraud event based on the image and the registration information. Fraud points corresponding to the possible fraud are output to the management server in conjunction with customer identification information. The management server includes a second storage device and a second processor. The second processor accumulates the received fraud points in association with the customer identification information and stores accumulated total points for each customer in the second storage device.

## Description

### FIELD

Embodiments described herein relate generally to self-checkout systems and methods of monitoring potentially fraudulent behaviors in such systems.

### BACKGROUND

A point-of-sale (POS) terminal is often provided at a retail store, such as a supermarket. A store clerk uses the POS terminal to execute a commodity registration process, a checkout process, and the like. Recently, a greater number of retail stores have introduced a self-checkout POS terminal instead of, or in addition to, the clerk-operated POS terminal. The self-checkout POS terminal is operated by a customer to execute the commodity registration and checkout processes.

Introduction of the self-checkout POS terminal, however, has created drawback of an increased possibility of fraudulent activity, wrongful acts, and the like by a customer (herein collectively referred to as fraud or customer fraud). For instance, it has become easier for a customer to not execute the commodity registration and checkout processes correctly or even to intentionally skip such processes. Various security measures have thus been considered and adopted to detect and prevent such customer fraud, but fraud detection might not always be executed accurately, and in general, it is difficult to entirely eliminate all occurrences of erroneous detection of fraudulent behavior.

Even if the fraud detection is erroneous, a store clerk must still deal with the situation with an initial assumption or suspicion that a customer has conducted fraud at the self-checkout POS terminal although that is not the case. The clerk might confront the customer, raising an unnecessary issue and making the situation further uncomfortable, which in turn might result in loss of customer's trust.

Hence, there is a need for a self-checkout system and a program that can detect customer fraud with a greater accuracy and assist a store clerk or the like when apparent fraud is detected.

### BRIEF DESCRIPTION OF THE DRAWINGS

FIG. 1 is a diagram illustrating an example of a self-checkout system according to a first embodiment.
FIG. 2 is a block diagram illustrating an example of a configuration of a self-checkout POS terminal according to a first embodiment.
FIG. 3 is a diagram illustrating an example of a data configuration of a fraud point master according to a first embodiment.
FIG. 4 is a block diagram illustrating an example of a configuration of a management server according to a first embodiment.
FIG. 5 is a diagram illustrating an example of a data configuration of a cumulative point database according to a first embodiment.
FIG. 6 is a block diagram illustrating an example of a configuration of a clerk terminal according to a first embodiment.
FIG. 7 is a block diagram illustrating an example of configurations of a self-checkout POS terminal, a management server and a clerk terminal in a self-checkout system according to a first embodiment.
FIG. 8 is a diagram illustrating an example of processes of a self-checkout system according to a first embodiment.
FIG. 9 is a block diagram illustrating an example of configurations of a self-checkout POS terminal, a management server and a clerk terminal in a self-checkout system according to a second embodiment.
FIG. 10 is a diagram illustrating an example of processes of a self-checkout system according to a second embodiment.

### DETAILED DESCRIPTION

The invention is set out in the appended set of claims.

In general, according to one embodiment, a self-checkout system includes a commodity registration apparatus and a management server. The management server is connected to the commodity registration apparatus. The commodity registration apparatus includes a first storage device and a first processor. The first processor is configured to: acquire an image of a customer at the commodity registration apparatus, acquire customer operation information related to operation of the commodity registration apparatus by the customer, detect fraud based on at least one the image and the customer operation information, and output a fraud point value corresponding to the detected fraud to the management server. The fraud point value is correlated with customer identification information identifying the customer at the commodity registration apparatus. The management server includes a second storage device and a second processor. The second processor is configured to: accumulate fraud points associated with the customer identification information based on received fraud point values from the commodity registration device, and store the accumulated fraud points in association with the customer identification information in the second storage device.

Hereinafter, some example embodiments of a self-checkout system and a method of operating such a system will be described with reference to the accompanying drawings.

### (First Embodiment)

### <Configuration of Self-Checkout System according to First Embodiment

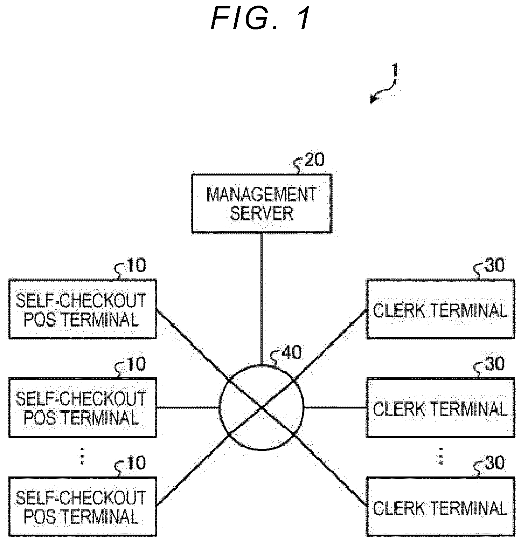

A self-checkout system 1 according to a first embodiment as shown in FIG. 1 includes a self-checkout POS terminal 10, a management server 20, and a clerk terminal 30.

These apparatuses or devices are connected to each other via a network 40, such as a local area network (LAN) or a virtual private network (VPN). In the present embodiment as shown in FIG. 1, there are multiple self-checkout POS terminals 10, one management server 20, and multiple clerk terminals 30, and the number of units can be set as appropriate.

The self-checkout POS terminal 10 is, for example, a self-checkout apparatus that executes, in response to customer operation, a commodity registration process for registering a commodity (article, item, product sold at a retail store) for purchased and a checkout process for the commodity or commodities registered in the commodity registration process . In this context, a "checkout process" refers to a settlement or accounting process by which the amount due for purchase of previously registered items is tendered by the customer and accepted as payment in the sales transaction. The self-checkout POS terminal 10 is one example of a commodity registration apparatus.

The management server 20 is, for example, a server apparatus that stores various information and data, such as information to be used for monitoring a customer. The management server 20 may include a plurality of server apparatuses or the like. The management server 20 may be provided through a cloud service or the like.

The clerk terminal 30 is, for example, an apparatus to be operated by a clerk for monitoring a customer who uses the self-checkout POS terminal 10.

One example of the clerk terminal 30 is an attendant terminal. The attendant terminal is an apparatus for monitoring the state of each of several self-checkout POS terminals 10. The clerk terminal 30 may be a mobile terminal, such as a smartphone or a tablet. The clerk terminal 30 is one example of a terminal apparatus.

### <Configuration of Self-Checkout POS Terminal according to First Embodiment

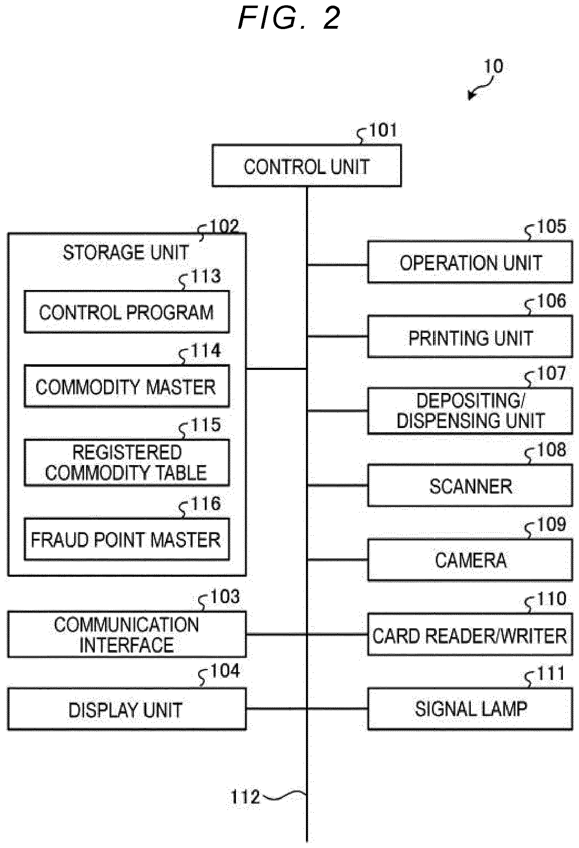

As shown in FIG. 2, the self-checkout POS terminal 10 includes a control unit 101, a storage unit 102, a communication interface 103, a display unit 104, an input operation unit 105, a printing unit 106, a cash depositing and dispensing unit 107, a scanner 108, a camera 109, a card reader and writer 110, and a signal lamp 111. These units are connected to each other through a system bus 112, such as a data bus or an address bus.

The control unit 101 includes a computer that controls operation of the self-checkout POS terminal 10 and implements various functions of the self-checkout POS terminal 10. The control unit 101 includes a central processing unit (CPU), a read only memory (ROM), and a random-access memory (RAM).

The CPU integrally controls operation of the self-checkout POS terminal 10. The ROM is a storage medium that stores various programs and data. The RAM is a storage medium that temporarily stores various programs and data. The CPU executes one or more programs stored in the ROM, the storage unit 102, or the like by using the RAM as a work area.

The storage unit 102 includes a storage apparatus, such as a hard disk drive (HDD) or a solid-state drive (SSD). The storage unit 102 stores a control program 113, a commodity master 114, a registered commodity table 115, and a fraud point master 116. The commodity master 114, the registered commodity table 115, and the fraud point master 116 may be stored in a store server (not separately illustrated) that manages various apparatuses including the self-checkout POS terminals 10 and the clerk terminals 20 provided at a store.

The control program 113 causes an operating system, a function, or the like of the self-checkout POS terminal 10 to be implemented. The control program 113 includes a program that executes various functions according to the present embodiment.

The commodity master 114 stores commodity information of various commodities (items) that are being sold at the store. For example, the commodity information includes information that can identify a commodity, such as a commodity code, a commodity name, and a price. If a commodity is to be recognized by object recognition, the commodity information may include feature data corresponding to an external appearance of the commodity.

The registered commodity table 115 is an information table in which the commodity information of the item(s) registered in the commodity registration process is stored.

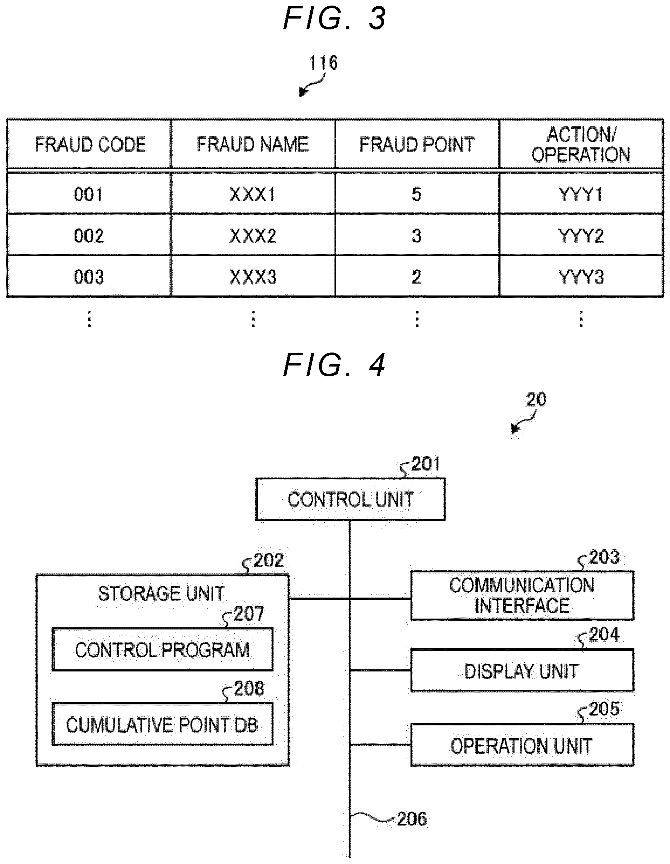

The fraud point master 116 stores fraud information representing various types of customer fraud behaviors or acts. One example of a data configuration of the fraud point master 116 is shown in FIG. 3. In the example, the fraud point master 116 stores a fraud code in association with a fraud name, a fraud point (fraud point value), and an action/operation.

The fraud code is identification information for various types of customer fraud behaviors. The fraud name is the common name or descriptor for the fraud behavior. The fraud point is information representing a point score (may also be referred to as "fraud point" or "fraud point value") that is assigned if the fraud behavior corresponding to the fraud code is detected. The action/operation is information representing an action and/or an operation by a customer that triggers fraud detection.

For example, the first row in FIG. 3 shows that, if a customer executes the action/operation "YYY1" at one of the self-checkout POS terminals 10, execution of the fraud "XXXI" identified by the fraud code "001" is considered to have been detected, and the fraud point "5" will be given to the customer.

The communication interface 103 is for communication with the management server 20 and the clerk terminal 30 via the network 40.

The display unit 104 includes a display, such as a liquid crystal display.

The input operation unit 105 includes an input apparatus permitting operation of the self-checkout POS terminal 10 by a customer or other user. the input operation unit 105 may comprise an input apparatus such as a touch panel stacked on the display of the display unit 104.

The printing unit 106 includes an apparatus with a printing function, such as a printer that prints out, for example, a receipt of a transaction related commodities that have been registered and checked out.

The cash depositing and dispensing unit 107 includes an apparatus with a function of receiving cash payment and handling cash change, such as an automatic change machine that handles coins, bills, notes, and the like. The cash depositing and dispensing unit 107 receives money as payment for commodity to be purchased and dispenses change corresponding to a change due amount.

The scanner 108 includes an apparatus that reads information required for the commodity registration process from the commodity to be purchased. The scanner 108 includes a solid-state imaging element, such as a charge coupled device (CCD) or a complementary metal oxide semiconductor (CMOS) device.

For example, the scanner 108 captures an image of a code symbol attached to a commodity and reads a commodity code from the captured image of the code symbol. In a case where a code symbol is not attached to a commodity, the scanner 108 captures an image of the commodity and acquires or reads commodity information through an object recognition process.

The object recognition may also be referred to as "generic object recognition." Various recognition techniques or generic object recognition techniques, such as those described in the following documents, can be used.

Keiji YANAI, "The Current State and Future Directions on Generic Object Recognition", Information Processing Society of Japan (IPSJ) Journal, Vol. 48, No. SIG 16 (searched on February 10, 2021), the Internet <URL: http://mm.cs.uec.ac.jp/IPSJ-TCVIM-Yanai.pdf>

Jamie Shotton et al. "Semantic Texton Forests for Image Categorization and Segmentation", (searched on February 10, 2021), the Internet <URL http://mi.eng.cam.ac.uk/~cipolla/publications/inproceedings/2008-CVPR-semantic-texton-forests.pdf>

The camera 109 captures an image, such as a still image, a series of images, or video (herein collectively referred to as an image), of a customer or a behavior of a customer. The camera 109 includes a solid imaging element, such as a CCD or a CMOS. The camera 109 is installed, for example, at a higher position on the self-checkout POS terminal 10 such that a behavior of a customer who operates the self-checkout POS terminal 10 can be captured or recorded. A plurality of cameras 109 may be provided. The camera 109 may be provided separately from the self-checkout POS terminal 10.

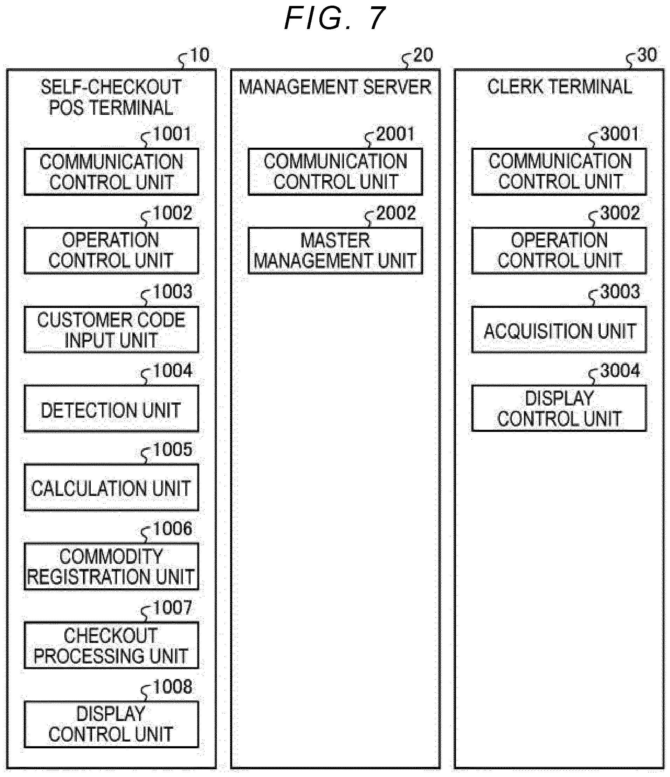

The image acquired by the camera 109 is transmitted to the clerk terminal 30 via a communication control unit 1001 (see FIG. 7) as a self-checkout POS image correlated with a self-checkout POS terminal code that identifies the self-checkout POS terminal 10 being used by the customer. The self-checkout POS image may be transmitted to the clerk terminal 30 in real time. The self-checkout POS image may also be transmitted to the management server 20.

The card reader and writer 110 reads and writes various information and data from or to a storage medium embedded in a card, such as a credit card, a membership card, or a customer card.

The signal lamp 111 includes a warning lamp that notifies occurrence of abnormality or the like at the self-checkout POS terminal 10 to a clerk.

### <Configuration of Management Server according to First Embodiment

As shown in FIG. 4, the management server 20 includes a control unit 201, a storage unit 202, a communication interface 203, a display unit 204, and an operation unit 205. These units are connected to each other through a system bus 206, such as a data bus or an address bus.

The control unit 201 includes a computer that controls operation of the management server 20 and implements various functions in the management server 20. The control unit 201 includes a CPU, a ROM, and a RAM

The CPU integrally controls operation of the management server 20. The ROM is a storage medium that stores various programs or data. The RAM is a storage medium that temporarily stores various programs and various data. The CPU executes one or more programs stored in the ROM, the storage unit 202, or the like by using the RAM as a work area.

The storage unit 202 includes a storage apparatus, such as an HDD or an SSD. The storage unit 202 stores a control program 207 and a cumulative point DB 208. The storage unit 202 may store the self-checkout POS image transmitted from the self-checkout POS terminal 10.

The control program 207 causes an operating system, a function, or the like of the management server 20 to be implemented. The control program 207 includes a program that provides various functions according to the present embodiment.

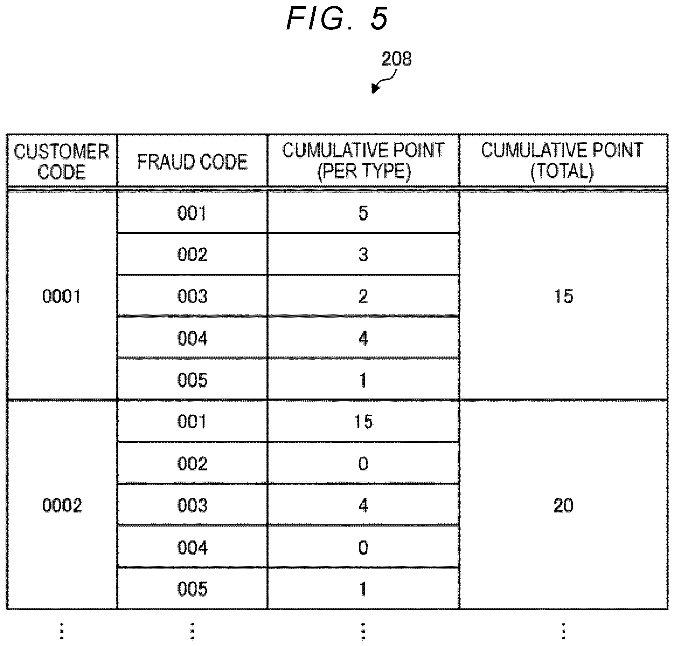

The cumulative point DB 208 is a database in which fraud points are accumulated and recorded on a per customer code basis. As shown in FIG. 5, for example, the cumulative point DB 208 includes a fraud code column, a per-type cumulative point column, and a total cumulative point column with values correlated to each other for each customer code.

Each customer code identifies an individual customer. The customer code is one example of customer identification information. The per-type cumulative point represents a cumulative value of the fraud points for each of the different fraud codes. The total cumulative point represents a cumulative value of all fraud points for a customer code. That is, the total cumulative point is the sum of the cumulative fraud points for all fraud codes for one customer (as identified by a particular customer code).

For example, the example of FIG. 5 shows that for customer code "0001", a cumulative points for fraud code "001" is "5".

Likewise, cumulative points of "3" for the fraud code "002," cumulative points of "2" for the fraud code "003," cumulative points of "4" for the fraud code "004," and cumulative points of "1" for the fraud code "005" in the depicted example. While the example shows the fraud codes up to "005" indicating that there are five different types of fraud, the number of fraud types is not limited thereto. There may be any number of fraud codes tracked in the cumulative point DB 208.

The example also shows that the customer "0001" has cumulative (total) fraud points of "15."

Referring back to FIG. 4, the communication interface 203 is for communication with the self-checkout POS terminal 10 and the clerk terminal 30 via the network 40.

The display unit 204 includes a display, such as a liquid crystal display.

The operation unit 205 includes an input apparatus for operation of the management server 20, such as a keyboard or a mouse, to be operated by a store manager or the like.

### <Configuration of Clerk Terminal according to First Embodiment

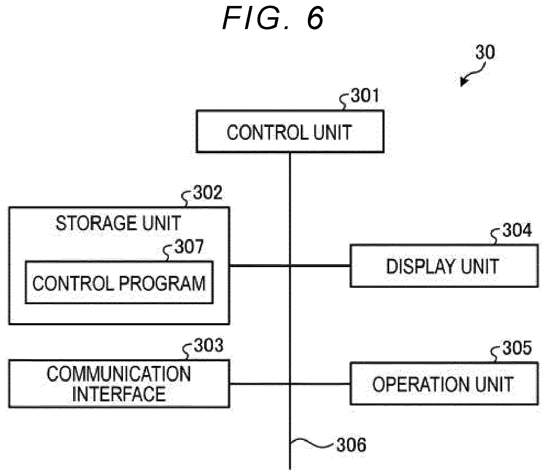

As shown in FIG. 6, for example, the clerk terminal 30 includes a control unit 301, a storage unit 302, a communication interface 303, a display unit 304, and an operation unit 305. These units are connected to each other through a system bus 306, such as a data bus or an address bus.

The control unit 301 includes a computer that controls operation of the clerk terminal 30 and implements various functions in the clerk terminal 30.

The control unit 301 includes a CPU, a ROM, and a RAM. The CPU integrally controls operation of the clerk terminal 30. The ROM is a storage medium that stores various programs and data. The RAM is a storage medium that temporarily stores various programs and various data. The CPU executes one or more programs stored in the ROM, the storage unit 302, or the like by using the RAM as a work area.

The storage unit 302 includes a storage apparatus, such as an HDD or an SSD. The storage unit 302 stores a control program 307.

The control program 307 causes an operating system, a function, or the like of the clerk terminal 30 to be implemented. The control program 307 includes a program that causes the clerk terminal 30 to provide various functions according to the present embodiment.

The communication interface 303 is for communication with the self-checkout POS terminal 10 or the management server 20 via the network 40.

The display unit 304 includes a display, such as a liquid crystal display. The display unit 304 is one example of a display apparatus.

The operation unit 305 includes an input apparatus for operation of the clerk terminal 30, such as a touch panel, to be operated by a clerk or the like.

### <Configuration of Self-Checkout System according to First Embodiment

In the self-checkout system 1, the control unit 101 of the self-checkout POS terminal 10 provides each of the functional units shown in FIG. 7 by loading the control program 113 from the storage unit 102 to the RAM and executing the relevant operations based on the control program 113.

Specifically, the control unit 101 of the self-checkout POS terminal 10 includes, as functional units, a communication control unit 1001, an operation control unit 1002, a customer code input unit 1003, a detection unit 1004, a calculation unit 1005, a commodity registration unit 1006, a checkout processing unit 1007, and a display control unit 1008.

The communication control unit 1001 controls the communication interface 103 and controls communication via the network 40. For example, the communication control unit 1001 transmits the self-checkout POS image to the clerk terminal 30.

The operation control unit 1002 works with the input operation unit 105 and receives various kinds of user input operations or the like via the input operation unit 105.

The customer code input unit 1003 controls, for example, the card reader and writer 110 for receiving input of a customer code stored in a customer card or the like. The customer code input unit 1003 is one example of a first input unit.

The customer code input unit 1003 may also store in the storage unit 202 of the management server 20 a data table that correlates a face image (facial image) to a customer code for each customer in advance and retrieves from such a data table the customer code corresponding a face image of a customer captured by the camera 109. In such a case, the face image of the customer may be used as the identification information instead of or in addition to the customer code.

After the input of the customer code, the customer code input unit 1003 correlates the customer code with a self-checkout POS terminal identification code of the self-checkout POS terminal 10 and controls the communication control unit 1001 to transmit the correlated customer code and self-checkout POS terminal identification code to the management server 20. In this case, the communication control unit 1001 is an example of a second transmission unit, and the transmitted information is an example of second information. The customer code input to the self-checkout POS terminal 10 may be cleared or deleted once the checkout process ends.

The detection unit 1004 detects fraud behavior by a customer based on a captured image and/or information related to operation of the self-checkout POS terminal 10. Fraud or fraud behavior refers here to a behavior or act of a customer that disadvantages a retail store. Examples of such customer fraud include, but are not limited to, stealing a commodity. In addition, if a plurality of candidate commodities are presented by the object recognition process, then fraud includes selecting a candidate commodity that is cheaper than the actual commodity.

Fraud examples include not only an obvious fraud, such as commodity theft, but also a suspected fraud behavior, such as a customer's abnormal or unusual action different from an action that is expected to be executed in a normal commodity registration process.

The detection unit 1004 detects such customer fraud based on the images acquired by the camera 109. For example, the detection unit 1004 recognizes (detects) fraud in an action or a behavior of a customer at the self-checkout POS terminal 10 based on analysis of images acquired by the camera 109. For example, if an action that satisfies a predetermined fraud condition is recognized in an image, the detection unit 1004 determines that the customer's action is fraud. An action that satisfies a fraud condition is defined from the actions and operations stored in the fraud point master 116.

For example, the detection unit 1004 analyzes the captured image and, if an action in which a customer puts a commodity into a shopping bag without executing the checkout process is recognized, detects the action as fraud. At this time, the detection unit 1004 also identifies the particular type of the detected fraud (for example, taking away an unprocessed commodity) based on the analysis result of the image.

Instead of or in addition to the fraud detection based on the captured image, the detection unit 1004 may detect fraud based on customer operation information from the self-checkout POS terminal 10. For example, the detection unit 1004 acquires and analyzes the information related to customer's operation of the self-checkout POS terminal 10 and, when an operation that satisfies a predetermined fraud condition is recognized, determines such an operation as fraud. In the present embodiment, an operation that meets a fraud condition is defined by the action/operation information in the fraud point master 116.

For example, assuming that there are a plurality of candidate commodities recognized by the object recognition process, if a customer repeatedly executes (for example, twice or more) an operation of selecting a commodity that is not the first candidate commodity regarded as the most likely matching one but rather selects a candidate that is cheaper than the first candidate, the detection unit 1004 detects this operation as fraud (or potential fraud). In this case, the detection unit 1004 detects "fraud relating to object recognition" as the fraud behavior.

Such repetitive execution of a certain operation (for example, twice or more) is one example condition for the fraud detection. For example, the detection unit 1004 may consider a fraud event to occur when a certain checkout process has been performed by the same customer a number of times that exceeds a preset threshold number. Fraud in the performance of merchandise registration related to object recognition is one example of possible fraud, and the detection unit 1004 may detect fraud relating other checkout and registration processes or repetitions thereof.

The calculation unit 1005 calculates the fraud points based on values in the fraud point master 116. In general, the values set for the fraud points correlate to the seriousness of the type of fraud.

The calculation unit 1005 refers to the fraud point master 116 and calculates the fraud points corresponding to the fraud detected by the detection unit 1004. In the example of FIG. 3, if the action/operation "YYY1" is recognized by image analysis or otherwise, the detection unit 1004 detects fraud name "XXXI" corresponding to the fraud code "001". The calculation unit 1005 uses the fraud point value "5" corresponding to the fraud code "001" as the fraud points assigned to the detected fraud event.

The calculation unit 1005 correlates the calculated fraud points to the customer code input from the customer code input unit 1003 along with the associated fraud code and self-checkout POS terminal code and controls the communication control unit 1001 to transmit the correlated information to the management server 20 as fraud detection information. In this case, the fraud detection information is one example of first information, and the communication control unit 1001 is one example of a first transmission unit.

The commodity registration unit 1006 executes the commodity registration process in response to customer operation. For example, the commodity registration unit 1006 receives an input of a commodity code when the scanner 108 reads a code symbol attached to a commodity. The commodity registration unit 1006 retrieves the commodity information of the input commodity code from the commodity master 114. The commodity registration unit 1006 registers the retrieved commodity information in the registered commodity table 115.

The checkout processing unit 1007 controls the cash depositing and dispensing unit 107 to execute the checkout process. For example, the checkout processing unit 1007 calculates a total price of commodities registered in the registered commodity table 115 by the commodity registration unit 1006. The checkout processing unit 1007 compares the money received by the cash depositing and dispensing unit 107 to the calculated total price to determine whether there is any change due. If there is change due, the checkout processing unit 1007 causes the cash depositing and dispensing unit 107 to dispense the change.

The display control unit 1008 controls the display unit 104 to display various screens, data, information, or the like. For example, the display control unit 1008 displays a commodity registration screen for the registration process of a commodity to be purchased by a customer and a checkout process screen for the checkout process of the registered commodity.

The control unit 201 of the management server 20 generates the respective units shown in FIG. 7 in the RAM by loading the control program 207 of the storage unit 202 to the RAM and executing the relevant operation based on the control program 207. The units generated by the control unit 201 includes, for example, a communication control unit 2001 and a master management unit 2002.

The communication control unit 2001 controls the communication interface 203 to execute communication via the network 40. In one instance, the communication control unit 2001 receives the input information transmitted from the communication control unit 1001 of the self-checkout POS terminal 10. In this case, the communication control unit 2001 is an example of a second reception unit.

For example, the communication control unit 2001 receives the fraud detection information transmitted from the communication control unit 1001. In this case, the communication control unit 2001 is an example of a first reception unit.

The master management unit 2002 controls the storage unit 202 to manage the cumulative point DB 208. For example, the master management unit 2002 specifies an accumulation result for the fraud points recorded by the master management unit 2002 based on the input information received by the communication control unit 2001. The accumulation result corresponds to a customer code input from the customer code input unit 1003. In this case, the master management unit 2002 is an example of a specifying unit.

If the communication control unit 2001 receives the input information, the master management unit 2002 identifies the total cumulative point corresponding to the customer code in the input information. The master management unit 2002 correlates the specified total cumulative point, the customer code, and the self-checkout POS terminal code with each other to generate the most recent point information.

The master management unit 2002 controls the communication control unit 2001 to transmit and provide this most recent point information to the clerk terminal 30. In this case, the communication control unit 2001 is an example of a provision unit.

As one example, in a case where the cumulative point DB 208 stores data as shown in FIG. 5 and the customer code and the self-checkout POS terminal code are "0002" and "POS001" respectively, the communication control unit 2001 first receives the input information including the customer code "0002" and the self-checkout POS terminal code "POS001" correlated with each other.

The master management unit 2002 then retrieves the total cumulative point value of "20" corresponding to the customer code "0002" from the cumulative point DB 208 and generates the most recent point information in which the identified total cumulative point "20" is correlated with both the customer code "0002" and the self-checkout POS terminal code "POS001."

The master management unit 2002 controls the communication control unit 2001 to transmit and provide the generated most recent point information to the clerk terminal 30.

The master management unit 2002 may accumulate the fraud points by customer code and record an accumulation result for the fraud points based on the fraud detection information received by the communication control unit 2001. In this case, the master management unit 2002 is an example of a recording unit.

The master management unit 2002 controls the communication control unit 2001 to transmit and provide the accumulation result for the fraud points to the clerk terminal 30. In this case, the communication control unit 2001 is an example of a provision unit.

If the communication control unit 2001 receives the fraud detection information, the master management unit 2002 retrieves, from the cumulative point DB 208, the fraud code, the per-type cumulative point, and the total cumulative points corresponding to the customer code included in the fraud detection information.

From the retrieved fraud code, the per-type cumulative point, and the total cumulative point, the master management unit 2002 retrieves the per-type cumulative point and the total cumulative points corresponding to the fraud code included in the fraud detection information. The master management unit 2002 then adds the fraud points included in the fraud detection information to the extracted per-type cumulative point and the total cumulative point, records the addition result, and updates the cumulative point DB 208.

As one example, in a case where the cumulative point DB 208 stores data as shown FIG. 5 and the customer code, the fraud code, the fraud point, and the self-checkout POS terminal code are "0001," "001," "5," and "POS001" respectively, the communication control unit 2001 receives the fraud detection information including the customer code "0001," the fraud code "001," the fraud point "5," and the self-checkout POS terminal code "POS001" correlated with each other.

The master management unit 2002 then retrieves the per-type cumulative points "5" and the total cumulative points "15" corresponding to both the customer code "0001" and the fraud code "001" from the cumulative point DB 208.

Subsequently, the master management unit 2002 adds the fraud points "5" included in the fraud detection information to the retrieved per-type cumulative points "5" to calculate the per-type cumulative points as "10." Further, the master management unit 2002 adds the fraud point value "5" included in the fraud detection information to the total cumulative points "15" to calculate the new total cumulative points as "20".

The master management unit 2002 correlates the calculated total cumulative points "20" (that is the accumulation result for the fraud points) with the customer code "0001" and the self-checkout POS terminal code "POS001" and controls the communication control unit 2001 to transmit the correlated information to the clerk terminal 30 as updated (most recent) point information.

The control unit 301 of the clerk terminal 30 provides the functional units shown in FIG. 7 in the RAM by loading then executing the control program 307. The generated functional units of the control unit 301 include, for example, a communication control unit 3001, an operation control unit 3002, an acquisition unit 3003, and a display control unit 3004.

The communication control unit 3001 controls the communication interface 303 to execute communication via the network 40. In one instance, the communication control unit 3001 receives the most recent point information or the updated point information transmitted from the communication control unit 2001. The communication control unit 3001 also receives, for example, the self-checkout POS image transmitted from the communication control unit 1001 of the self-checkout POS terminal 10.

The operation control unit 3002 receives various kinds of input operations from the clerk/user via the operation unit 305.

The acquisition unit 3003 acquires a peripheral image showing a state of surroundings of the self-checkout POS terminal 10. For example, the acquisition unit 3003 acquires the self-checkout POS image received by the communication control unit 3001 as the peripheral image. The acquisition unit 3003 may instead or additionally acquire the self-checkout POS image via the management server 20.

The display control unit 3004 controls the display unit 304 to display various screens, information, and data. For example, the display control unit 3004 causes the display unit 304 to display the accumulation result of the fraud points provided from the management server 20. The display form of the accumulation result is not particularly limited, and various display forms can be adopted.

The display control unit 3004 controls the display unit 304 to display the self-checkout POS image acquired by the acquisition unit 3003. The display control unit 3004 may display a plurality of self-checkout POS images transmitted from the self-checkout POS terminals 10 on one screen at the same time. The display control unit 3004 may continuously display the self-checkout POS image in real time.

The self-checkout POS image includes the self-checkout POS terminal code. Therefore, even when the display control unit 3004 displays a plurality of self-checkout POS images, the display control unit 3004 can identify which one of the self-checkout POS images corresponds to a specific terminal, that is in the present example the self-checkout POS terminal 10.

If the communication control unit 3001 receives the most recent point information from the communication control unit 2001 of the management server 20, the display control unit 3004 identifies the self-checkout POS terminal 10 from which the customer code included in the most recent point information was input based on the self-checkout POS terminal code included in the most recent point information.

The display control unit 3004 causes the display unit 304 to display the customer code and the total cumulative points included in the most recent point information to be superimposed on the self-checkout POS image of the identified self-checkout POS terminal 10.

The display control unit 3004 may execute a process of analyzing the self-checkout POS image, recognizing the customer in the self-checkout POS image, and displaying the total cumulative point. The total cumulative point may be displayed, for example, at a position above a customer's head. The display control unit 3004 may simply execute a process of aligning and displaying the self-checkout POS terminal code, the customer code, and the total cumulative point without displaying the peripheral image of the self-checkout POS terminal 10.

If the communication control unit 3001 receives the updated point information from communication control unit 2001 of the management server 20, the display control unit 3004 identifies the self-checkout POS terminal 10 that is being used by the customer who has conducted fraud based on the self-checkout POS terminal code included in the updated point information.

The display control unit 3004 causes the display unit 304 to display the customer code and the total cumulative point included in the updated point information to be superimposed on the self-checkout POS image of the identified self-checkout POS terminal 10.

If the total cumulative point in the updated point information exceeds a predetermined threshold, the display control unit 3004 controls the display unit 304 to highlight the customer who has the threshold-exceeding total cumulative point. In one instance, the display control unit 3004 may control the display unit 304 to highlight the customer code and the total cumulative point that have been superimposed on the self-checkout POS image by surrounding them with a red frame or the like.

There may be two or more thresholds for determination of highlight display. For example, in a case where two thresholds are preset, if the total cumulative point exceeds a first threshold, the display control unit 3004 controls the display unit 304 to highlight the customer code and the total cumulative point superimposed on the self-checkout POS image by surrounding them with a yellow frame, and if the total cumulative point exceeds a second threshold, the display control unit 3004 controls the display unit 304 to highlight the customer code and the total cumulative point superimposed on the self-checkout POS image by surrounding them with a red frame.

This way, if the total cumulative point, that is the total of the cumulative fraud points of various types of fraud conducted by a specific customer, exceeds one or more predetermined thresholds, the display control unit 3004 and the display unit 304 of the clerk terminal 30 can notify a clerk of such a customer by the highlight display of the relevant information such that the clerk can visually recognize the customer who should be paid attention to. This can effectively reduce the possibility that the clerk misses or overlooks the customer fraud.

The display control unit 3004 may also control the display unit 304 to display detailed information relating to the total cumulative point.

If the display control unit 3004 is instructed to display the detailed information by the clerk, the display control unit 3004 starts a process of displaying the detailed information. For example, if the clerk touches the self-checkout POS image displayed by the display unit 304, the display control unit 3004 displays a menu including a "detail display" process on the display unit 304. At this time, the display control unit 3004 identifies the self-checkout POS terminal 10 based on the self-checkout POS terminal code included in the self-checkout POS image.

If the clerk touches or selects the "detail display" process from the displayed menu, an instruction to display the detailed information will be sent to the display control unit 3004.

Upon receipt of the instruction, the display control unit 3004 correlates a customer code of a customer for which the detailed information is requested, a clerk terminal code for identifying the clerk terminal 30, the self-checkout POS terminal code, and information indicating a request of the detailed information with each other and controls the communication control unit 3001 to transmit the correlated information to the management server 20 as detailed information request.

The customer code is of the customer for which the detailed information is requested and input by the customer code input unit 1003 of the identified self-checkout POS terminal 10. The clerk terminal code is of the clerk terminal 30 that is being operated by the clerk. The self-checkout POS terminal code is of the identified self-checkout POS terminal 10.

The communication control unit 2001 of the management server 20 receives the detailed information request transmitted from the communication control unit 3001. The master management unit 2002 retrieves from the cumulative point DB 208 the fraud code, the per-type cumulative point, and the total cumulative point that correspond to the customer code included in the received detailed information request. The master management unit 2002 controls the communication control unit 2001 to transmit the retrieved information to the clerk terminal as the requested detailed information.

The communication control unit 3001 of the clerk terminal 30 receives the detailed information transmitted from the communication control unit 2001. The display control unit 3004 controls the display unit 304 to display the received detailed information.

As one example, in a case where the cumulative point DB 208 stores the data as shown in FIG. 5 and the customer code of "0001" is included in the detailed information request, the master management unit 2002 identifies the information correlated with the customer code "0001" in the cumulative point DB 208.

The master management unit 2002 then retrieves the following data from the cumulative point DB208:
the per-type cumulative point "5" of the fraud code "001";
the per-type cumulative point "3" of the fraud code "002";
the per-type cumulative point "2" of the fraud code "003";
the per-type cumulative point "4" of the fraud code "004";
the per-type cumulative point "1" of the fraud code "005"; and
the total cumulative point "15."

The master management unit 2002 correlates the retrieved data with the customer code and the self-checkout POS terminal code included in the detailed information request and controls the communication control unit 2001 to transmit, as the requested detailed information, the correlated information to the clerk terminal 30 identified by the clerk terminal code included in the detailed information request.

The communication control unit 3001 of the clerk terminal 30 receives the detailed information transmitted from the communication control unit 2001. The display control unit 3004 displays the information and the customer code included in the received detailed information to be superimposed on the self-checkout POS image of the self-checkout POS terminal 10 identified by the self-checkout POS terminal code included in the received detailed information.

This way, based on the detailed breakdown of the accumulated fraud point given to the identified customer, the clerk can easily determine which action or actions of the customer should be paid further attention to.

### <Process of Self-Checkout System according to First Embodiment

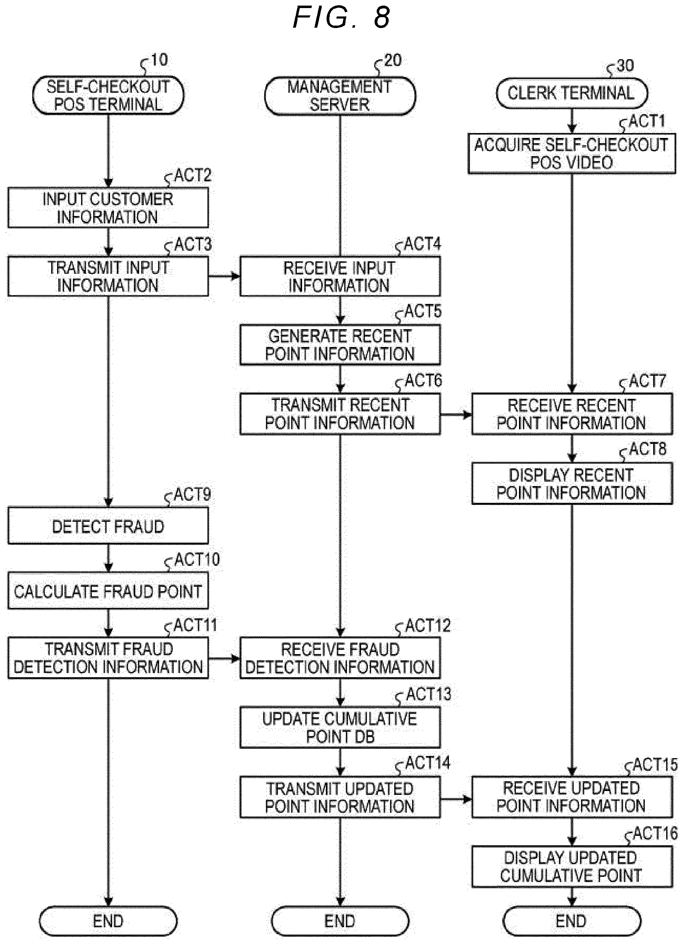

As shown in the process example of FIG. 8, the acquisition unit 3003 of the clerk terminal 30 acquires the self-checkout POS image (such as a still image, a series of images, and a video) captured by the self-checkout POS terminal 10 (ACT 1).

The customer code input unit 1003 of the self-checkout POS terminal 10 controls the card reader and writer 110 to receive an input of a customer code stored in a customer card or the like (ACT 2).

The communication control unit 1001 correlates the customer code received by the customer code input unit 1003 with the self-checkout POS terminal code of the self-checkout POS terminal 10 that has received the customer code and transmits the correlated information to the management server 20 as the input information (ACT 3).

The communication control unit 2001 of the management server 20 receives information transmitted from the communication control unit 1001 of the self-checkout POS terminal 10 (ACT 4).

The master management unit 2002 retrieves the total cumulative point corresponding to the customer code included in the input information from the cumulative point DB 208 and correlates the retrieved total cumulative point with both the customer code and the self-checkout POS terminal code included in the input information to generate most recent point information (ACT 5).

The communication control unit 2001 transmits the generated most recent point information generated to the clerk terminal 30 (ACT 6).

The communication control unit 3001 of the clerk terminal 30 receives the most recent point information transmitted from the communication control unit 2001 of the management server 20 (ACT 7).

The display control unit 3004 controls the display unit 304 to display the self-checkout POS image acquired by the acquisition unit 3003. The display control unit 3004 further displays the customer code and the total cumulative point included in the most recent point information to be superimposed on the self-checkout POS image (ACT 8).

The detection unit 1004 of the self-checkout POS terminal 10 detects fraud by a customer based on a customer image captured by the camera 109 or based on customer operation information of the self-checkout POS terminal 10 (ACT 9).

The calculation unit 1005 calculates the fraud points based on the fraud detected by the detection unit 1004 and the corresponding point values in the fraud point master 116 (ACT 10).

The communication control unit 1001 correlates the calculated fraud points with the customer code and the self-checkout POS terminal code and transmits the correlated information to the management server 20 as the fraud detection information (ACT 11).

The communication control unit 2001 of the management server 20 receives the fraud detection information transmitted from the communication control unit 1001 of the self-checkout POS terminal 10 (ACT 12).

The master management unit 2002 updates the cumulative point DB 208 based on the received fraud detection information (ACT 13). The master management unit 2002 accumulates the fraud points per the customer code and records the accumulation result of the fraud points.

The communication control unit 2001 correlates the updated total cumulative point (that is the accumulation result of the fraud points) with the customer code and the self-checkout POS terminal code and transmits the correlated information to the clerk terminal 30 as the updated point information (ACT 14).

The communication control unit 3001 of the clerk terminal 30 receives the updated point information transmitted from the communication control unit 2001 of the management server 20 (ACT 15).

The display control unit 3004 controls the display unit 304 to display the self-checkout POS image acquired by the acquisition unit 3003. The display control unit 3004 further controls the display unit 304 to superimpose the customer code and the total cumulative points included in the updated point information on the self-checkout POS image (ACT 16). Then, the process ends.

### <Effects of Self-Checkout System according to First Embodiment>

The self-checkout system 1 according to the first embodiment includes the self-checkout POS terminal 10 and the management server 20. The self-checkout POS terminal 10 of the first embodiment includes: the detection unit 1004 configured to detect fraud based on either one or both of an image of a customer who operates the self-checkout POS terminal 10 and customer operation information of the self-checkout POS terminal 10; and the communication control unit 1001 configured to transmit, if the fraud is detected, fraud detection information including a fraud point value and a customer code to the management server 20. The fraud point value corresponds to the detected fraud type. The customer code uniquely identifies the customer.

The management server 20 of the first embodiment includes: a communication control unit 2001 configured to receive the fraud detection information transmitted from the communication control unit 1001; and a master management unit 2002 stores the accumulated fraud points for each customer code based on the fraud detection information received by the communication control unit 2001. The communication control unit 2001 or other provision unit is configured to the accumulated fraud point information recorded by the master management unit 2002 to a clerk terminal 30 (that is, a terminal device or the like operated by a store clerk or the like).

With the self-checkout system 1 of the first embodiment, the fraud points per customer can be provided to the clerk who is operating the clerk terminal 30, and the clerk can more readily determine whether the customer should be paid attention to based on the fraud points that represents the past action of the same customer. Therefore, the customer is more easily and effectively monitored. For example, even in a case where a customer's non-fraud behavior is erroneously detected as fraud, if the fraud points previously given to the customer is low or below a predetermined threshold, the clerk can flexibly make a determination on the spot such that no special measure or action is necessary for that customer. This can, for example, avoid an undesirable event or situation where a clerk approaches a customer with incorrect allegation of fraud, possibly causing a trouble with the customer.

This way, upon detection of a possible fraud whether the detection is erroneous or not, the information (for example, the cumulative fraud points for a particular customer) that can be used as an index for determining whether to take any necessary measure for a fraud case can be provided to the clerk in a timely manner. Accordingly, the self-checkout system 1 of the present embodiment not only can detect possible customer fraud with a greater accuracy but also can readily assist a store clerk or the like in making a correct judgement of whether to take any measure or action on the spot when the fraud is detected.

### (Second Embodiment)

The self-checkout system 1 according to the second embodiment will be described. The self-checkout system 1 of the second embodiment includes a configuration permitting a clerk to input fraud notices or information relating to fraud from the clerk terminal 30. In the descriptions of the second embodiment, components, elements, configurations, and the like that are the same as those of the first embodiment are represented by the same reference numerals as those used in the first embodiment, and the detailed descriptions thereof may be omitted.

### <Configuration of Self-Checkout System according to Second Embodiment>

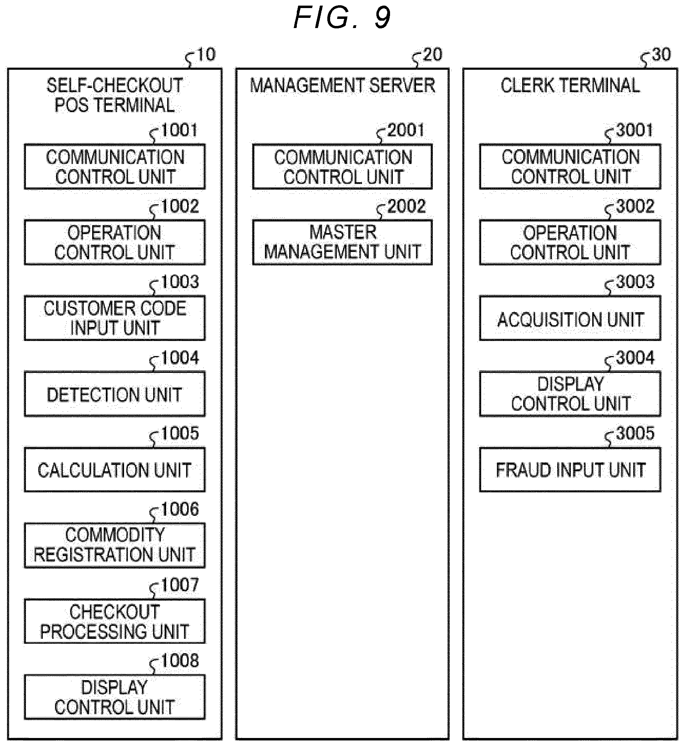

A shown in FIG. 9, the clerk terminal 30 of the self-checkout system 1 according to the second embodiment includes a fraud input unit 3005.

The fraud input unit 3005 receives fraud confirmation information indicating that customer fraud behavior has been confirmed or noticed by the clerk. For example, such fraud confirmation can be manually made by a clerk who is operating the clerk terminal 30. The fraud input unit 3005 is an example of a second input unit. The fraud input unit 3005 receives the fraud confirmation information from the clerk via the operation unit 305.

For example, if a clerk witnesses customer fraud, the clerk uses the operation unit 305 to select the self-checkout POS terminal 10 being used by the customer who has conducted the fraud. The clerk selects the self-checkout POS terminal 10, for example, by touching the self-checkout POS image thereof displayed on the display unit 304.

The operation control unit 3002 identifies the customer code input via the customer code input unit 1003 of the selected self-checkout POS terminal 10. When the customer code is identified, the display control unit 3004 controls the display unit 304 to display a menu that allows one or more processes, such as a "detail display" process or a "fraud report" process, to be selected by the clerk.

If a customer code is neither input nor identified, that is if the selected self-checkout POS terminal 10 is not currently being used, the display control unit 3004 may control the display unit 304 not to display any menu.

In the case where the menu is displayed, if the clerk touches and selects the "fraud report" process, the fraud input unit 3005 receives the fraud confirmation information. Prior to the input of the fraud confirmation information, a confirmation message directed to the clerk such as "Are you sure you want to report fraud?" may be displayed on the display unit 304.

The "fraud report" process may be ranked depending on a degree of certainty or doubtfulness regarding the witnessed customer fraud. For example, the display control unit 3004 may control the display unit 304 to display "fraud report (rank 1)," "fraud report (rank 2)," and "fraud report (rank 3)" as the ranked processes.

Once the fraud confirmation information has been received, the fraud input unit 3005 correlates the received fraud confirmation information with the customer code of the customer who has performed the fraud (that is the customer code input at the selected self-checkout POS terminal 10) and controls the communication control unit 3001 to transmit the correlated information to the selected self-checkout POS terminal 10 as a fraud report. In this case, the communication control unit 3001 is an example of a third transmission unit.

The communication control unit 1001 of the self-checkout POS terminal 10 receives the fraud report from the communication control unit 3001. In this case, the communication control unit 1001 is an example of a third reception unit.

The detection unit 1004 detects the fraud based on the received fraud report. For example, the detection unit 1004 detects the fraud identified in the fraud report. Alternatively or additionally, as in the first embodiment, the detection unit 1004 may detect the fraud based on a customer image captured by the camera 109 or based on customer operation information of the self-checkout POS terminal 10.

In the second embodiment, the fraud point master 116 includes a "fraud report" value and "fraud point (numerical value)" correlated with each other and registered therein. In the case where there are a plurality of fraud reports ranked based on a factor, such as the degree of certainty or doubtfulness of the customer fraud, the fraud reports are correlated with different "fraud points" according to the respective ranks.

### <Process of Self-Checkout System according to Second Embodiment>

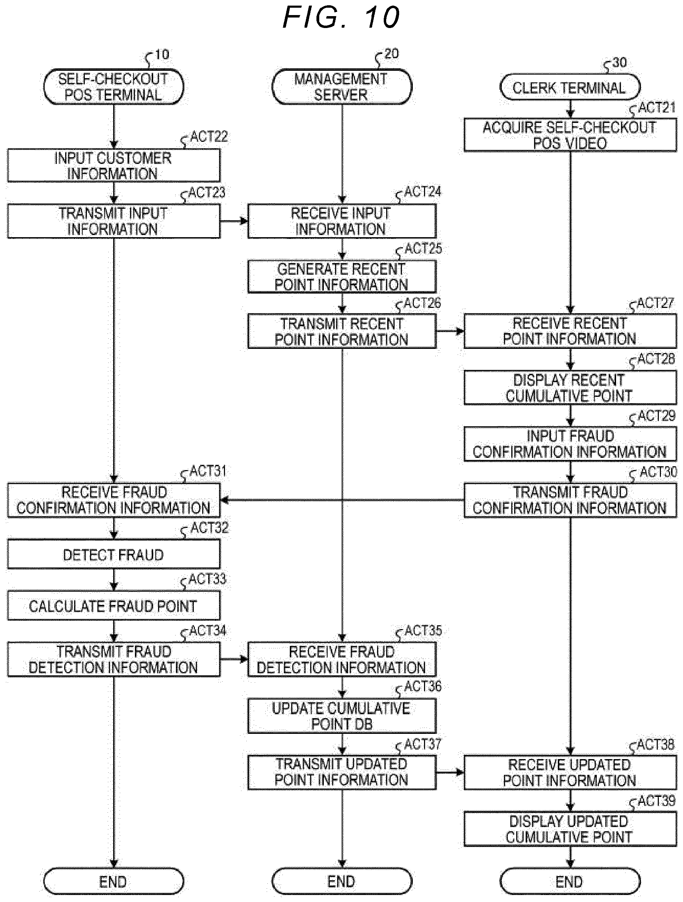

As shown in the process example of FIG. 10, the acquisition unit 3003 of the clerk terminal 30 acquires the self-checkout POS video (ACT 21).

The customer code input unit 1003 of the self-checkout POS terminal 10 controls the card reader and writer 110 to receive a customer code stored in a customer card or the like (ACT 22).

The communication control unit 1001 correlates the received customer code with the self-checkout POS terminal code of the self-checkout POS terminal 10 and transmits the correlated information to the management server 20 as the input information (ACT 23).

The communication control unit 2001 of the management server 20 transmits the input information received from the communication control unit 1001 to the clerk terminal 30 (ACT 24).

The master management unit 2002 retrieves the total cumulative points corresponding to the customer code included in the input information from the cumulative point DB 208. The master management unit 2002 correlates the retrieved total cumulative points with the customer code and the self-checkout POS terminal code included in the input information to generate most recent point information (ACT 25).

The communication control unit 2001 transmits the generated most recent point information to the clerk terminal 30 (ACT 26).

The communication control unit 3001 of the clerk terminal 30 receives the most recent point information transmitted from the communication control unit 2001 (ACT 27).

The display control unit 3004 controls the display unit 304 to display the self-checkout POS image acquired by the acquisition unit 3003. The display control unit 3004 further control the display unit 304 to superimpose the customer code and the total cumulative points included in the most recent point information on the self-checkout POS video (ACT 28).

The fraud input unit 3005 receives fraud confirmation information from the clerk (ACT 29).

The communication control unit 3001 correlates the fraud confirmation information received by the fraud input unit 3005 with an identification code of the customer and transmits the correlated information to the self-checkout POS terminal 10 as a fraud report (ACT 30).

The communication control unit 1001 of the self-checkout POS terminal 10 receives the fraud report from the communication control unit 3001 of the clerk terminal 30 (ACT 31).

The detection unit 1004 detects fraud by a customer based on the customer image acquired by the camera 109 and/or the customer operation information of the self-checkout POS terminal 10 as in the first embodiment, or based on the fraud report received by the communication control unit 1001 according to the second embodiment (ACT 32).

The calculation unit 1005 calculates the fraud points based on the fraud(s) detected by the detection unit 1004 and the corresponding value(s) in the fraud point master 116 (ACT 33).

The communication control unit 1001 correlates the fraud points calculated by the calculation unit 1005 with the customer code and the self-checkout POS terminal code and transmits the correlated information to the management server 20 as fraud detection information (ACT 34).

The communication control unit 2001 of the management server 20 receives the fraud detection information from the communication control unit 1001 (ACT 35).

The master management unit 2002 updates the cumulative point DB 208 based on the fraud detection information (ACT 36). In the update process, the master management unit 2002 accumulates the fraud points for each customer code and records the accumulation result.

The communication control unit 2001 correlates the updated total cumulative points (that is the accumulation result of the fraud points) with the customer code and the self-checkout POS terminal code and transmits the correlated information to the clerk terminal 30 as the updated point information (ACT 37).

The communication control unit 3001 of the clerk terminal 30 receives the updated point information from the communication control unit 2001 (ACT 38).

The display control unit 3004 controls the display unit 304 to display the self-checkout POS video (or other images) acquired by the acquisition unit 3003. The display control unit 3004 further controls the display unit 304 to display the customer code and the total cumulative points in the updated point information to be superimposed on the self-checkout POS image (ACT 39). Then, the process ends.

### <Effects of Self-Checkout System according to Second Embodiment>

The clerk terminal 30 of the self-checkout system 1 according to the second embodiment includes the fraud input unit 3005 for input of fraud confirmation information (e.g., "fraud reports") indicating that customer fraud has been confirmed, witnessed, or detected by a clerk. The communication control unit 3001 transmits the fraud confirmation information to the self-checkout POS terminal 10.

The communication control unit 1001 of the self-checkout POS terminal 10 functions as a third reception unit that receives the fraud confirmation from the communication control unit 3001 of the clerk terminal 30, and the detection unit 1004 also detects fraud based on the received fraud confirmation information.

As a result, if a clerk discovers that a customer is conducting or has conducted fraud, the clerk can give fraud points to that customer based on the clerk's own determination/judgement. Hence, even if the fraud cannot be accurately detected based on images captured by the camera 109 or the customer operation information from the self-checkout POS terminal 10, a clerk can give fraud points to a suspicious customer based on the clerk's own observations and determinations.

### (Modified Examples/Embodiments)

The first and second embodiments can be modified as appropriate without departing from the gist of the disclosure.

### (Modification Example 1)

For example, while the first and second embodiments include the configuration where the commodity registration apparatus is the self-checkout POS terminal 10, the commodity registration apparatus may be a cart POS or a cart-type POS apparatus that can accommodate and carry to-be-purchased commodities and perform the commodity registration and checkout processes while being moved round and used by a customer.

With such a cart POS, a customer can execute the commodity registration and checkout processes at any place and at any time within store premises. In this case, for example, the fraud points or the accumulated fraud points of each customer is also informed to and displayed on the clerk terminal 30 such that a clerk can easily monitor an action of a customer using the cart POS.

### (Modification Example 2)

In the first and second embodiments, if the fraud points associated with a specific customer exceed the predetermined threshold, the display control unit 3004 of the clerk terminal 30 controls the display unit 304 to highlight the information related to that specific customer. However, a speaker and a notification control unit may be provided to the clerk terminal 30 such that if the fraud points exceed the predetermined threshold, the notification control unit controls the speaker to output a warning sound to the clerk who is using the clerk terminal 30. The warning sound may be output in addition to the highlighting of information on the display, or only the warning sound may be output.

If the number of the self-checkout POS terminals 10 being monitored by a clerk is large, the clerk may miss a customer who should be paid attention if the related customer information is just visually highlighted when displayed. However, in this modification example, a warning sound can be output. Therefore, it is less likely the clerk will miss a customer who should be paid attention.

### (Modification Example 3)

In the first and second embodiments, the point accumulation process simply adds up the fraud points per customer, per fraud type, per POS terminal, and the like. However, if a predetermined period of time is elapsed from the previous or most recent fraud detection for a specific customer, the fraud points may be reset, and the point accumulation tally may be restarted/reset.

For example, if another fraud event is not detected again in a predetermined period after a previous fraud event, it may be considered that the possibility that giving of the fraud points was more likely to have been given based on an erroneous detection. But if there is no reduction or resetting of already accumulated fraud points, then the clerk might be unnecessarily closely monitoring a likely innocent customer rather than other customers. Thus, in this modification example, once a predetermined period of time elapses after a fraud event, the fraud points can be reset or reduced. Therefore, it is considered that clerk attention may be more efficiently distributed amongst various customers.

### (Modification Example 4)

In the first and second embodiments, the self-checkout POS terminal 10 includes the detection unit 1004 and the calculation unit 1005. However, the management server 20 may instead include the detection unit 1004 and the calculation unit 1005 or substantially similar units performing functions of the detection unit 1004 and the calculation unit 1005.

For example, the self-checkout POS terminal 10 according to this modification example transmits the self-checkout POS images and the operation information of the self-checkout POS terminal 10 to the management server 20.

The storage unit 202 of the management server 20 according to this modification example stores the fraud point master 116. The detection unit 1004 in the management server 20 according to this modification example detects customer fraud based on the fraud point master 116 and the self-checkout POS image and/or the operation information transmitted from the self-checkout POS terminals 10.

The management server 20 accumulates the fraud points per customer code and fraud code based on the fraud detection result by the detection unit 1004 and records the accumulation result in the fraud points master 116 or the like.

For example, as in the first and second embodiments, the communication control unit 2001 receives the input information including the customer code transmitted from the communication control unit 1001. If the detection unit 1004 (now residing in, or being a function of, the management server 20) detects the fraud, the calculation unit 1005 (now residing in, or being a function of, the management server 20) calculates the fraud points.

The master management unit 2002 retrieves, from the cumulative point DB 208, the fraud codes, the per-type cumulative points, and the total cumulative points that are correlated with the customer code received by the communication control unit 2001.

The master management unit 2002 extracts both the per-type cumulative points and the total cumulative points correlated with the fraud code corresponding to the fraud detected by the detection unit 1004.

The master management unit 2002 updates the cumulative point DB 208 by adding the fraud points that have been calculated by the calculation unit 1005 to the per-type cumulative points and total cumulative points.

If this modification example is applied to the second embodiment, the communication control unit 3001 of the clerk terminal 30 transmits the fraud report to the management server 20 instead of the self-checkout POS terminal 10.

This modification example can reduce a processing load on the self-checkout POS terminal 10.

### (Modification Example 5)

In the first and second embodiments, the accumulation of the fraud points (accumulated fraud point values) of the master management unit 2002 of the management server 20 is provided to the clerk terminal 30, and the display control unit 3004 of the clerk terminal 30 displays the accumulated fraud point values. However, instead of the clerk terminal 30, the management server 20 may itself include the display control unit 3004 or a substantially similar unit performing functions of the display control unit 3004.

In this modification example, the display control unit 3004 in the management server 20 controls the display unit 304 of the clerk terminal 30 to display the accumulated fraud point values and the like generated by the master management unit 2002.

This modification example can reduce a processing load on the clerk terminal 30.

While a software program or the like that can be executed by each of the apparatuses, terminals, devices, and the like according to the present embodiments may be embedded in a non-transitory storage medium (for example, a ROM or an attached storage unit) of such apparatuses in advance, embodiments of the disclosure are not limited thereto. For example, such a program or programs may be provided in a non-transitory computer-readable recording medium, such as a CD-ROM, a flexible disk (FD), a CD-R, or a Digital Versatile Disk (DVD) in an installable or executable file format.

Furthermore, a program or programs may be downloaded through a LAN or the Internet.

In addition, a program or programs to be executed by any apparatuses according to any example embodiment described herein may be may be provided or distributed through a network such as the Internet.

While certain embodiments have been described these embodiments have been presented by way of example only and are not intended to limit the scope of the inventions. Indeed, the novel embodiments described herein may be embodied in a variety of other forms: furthermore, various omissions, substitutions and changes in the form of the embodiments described herein may be made without departing from the scope of the inventions. The accompanying claims and their equivalents are intended to cover such forms or modifications as would fall within the scope of the invention.

## Claims

1. A self-checkout system, comprising:
a commodity registration apparatus; and
a management server connected to the commodity registration apparatus, wherein
the commodity registration apparatus includes:
a first storage device;
a first processor configured to:
acquire an image of a customer at the commodity registration apparatus,
acquire customer operation information related to operation of the commodity registration apparatus by the customer,
detect fraud based on at least one of the image and the customer operation information, and
output a fraud point value corresponding to the detected fraud to the management server, the fraud point value being correlated with customer identification information identifying the customer at the commodity registration apparatus; and
the management server includes:
a second storage device; and
a second processor configured to:
accumulate fraud points associated with the customer identification information based on received fraud point values from the commodity registration device, and
store the accumulated fraud points in association with the customer identification information in the second storage device.

2. The self-checkout system according to claim 1, further comprising a clerk terminal connected to the management server, wherein the clerk terminal includes:
a first display; and
a third processor configured to cause the first display to indicate the accumulated fraud points provided by the management server.

3. The self-checkout system according to claim 2, wherein the third processor causes the first display to indicate the accumulated fraud points in conjunction with the image of the customer at the commodity registration apparatus.

4. The self-checkout system according to claim 2, wherein
the third processor is further configured to:
receive an input of a fraud confirmation indicating that fraud has been confirmed by a clerk at the clerk terminal, and
transmit the fraud confirmation to the commodity registration apparatus; and
the first processor is further configured to output, to the management server, a fraud point value based on the fraud confirmation information received from the clerk terminal.

5. The self-checkout system according to any one of claims 2 to 4, wherein the accumulated fraud points are provided to the clerk terminal from the management server to be displayed in a form visible to a clerk operating the clerk terminal.

6. The self-checkout system according to any one of claims 1 to 5, wherein the second processor accumulates fraud points for each customer on a fraud type classification basis and a total point basis.

7. The self-checkout system according to any one of claims 1 to 6, wherein
the first storage device is configured to store predetermined fraud point information, and
the first processor is further configured to calculate the fraud point values based on the stored predetermined fraud point information.

8. The self-checkout system according to any one of claims 1 to 7, wherein the first processor is further configured to perform a commodity registration process and a commodity checkout process.

9. The self-checkout system according to any one of claims 1 to 8, wherein the commodity registration apparatus is a self-checkout point-of-sale terminal.

10. The self-checkout system according to any one of claims 1 to 9, further comprising a plurality of commodity registration apparatuses connected to the management server.

11. A non-transitory computer-readable medium storing a program which, when executed, causes a computer to perform a method comprising:
acquiring first information including a fraud point value and a customer identification, the fraud point value corresponding to a fraud event that has been detected at a commodity registration apparatus based on at least one of an image of a customer who operates the commodity registration apparatus and information related to customer operation of the commodity registration apparatus;
accumulating fraud points for the customer identification based on the acquired first information, and
outputting, to a clerk terminal, the accumulated fraud points for the customer identification.

12. The non-transitory computer-readable medium according to claim 11, wherein
fraud events are classified into a plurality of types, and
the fraud point values are accumulated for each customer identification on a per type basis and a total point basis.

13. The non-transitory computer-readable medium according to claim 11 or 12, wherein the fraud point values are accumulated in a cumulative point database, and the method further comprises updating the cumulative point database based on the acquired first information.
